# EUROPÄISCHE PATENTSCHRIFT

(11) **EP 2 914 087 B1**
(45) Veröffentlichungstag und Bekanntmachung des Hinweises auf die Patenterteilung: **23.09.2020**
(21) Anmeldenummer: 13814013.2
(22) Anmeldetag: 23.10.2013
(51) Int. Cl.: A01F 15/04, A01F 15/08, B30B 9/30

(54) **VERFAHREN UND VORRICHTUNG ZUR KOMPRESSION VON LANGSTÄNGELIGEM PFLANZENGUT**
METHOD AND DEVICE FOR COMPRESSION OF CROP WITH LONG STALKS
PROCÉDÉ ET DISPOSITIF POUR COMPRESSION DE BIOMASSE AVEC TIGES LONGES

(30) Priorität: 31.10.2012 DE 102012110417
(43) Veröffentlichungstag der Anmeldung: 09.09.2015
(73) Patentinhaber: Dreher, Ingo, 78582 Balgheim (DE)
(72) Erfinder: Dreher, Ingo, 78582 Balgheim (DE)
(74) Vertreter: Hoeger, Stellrecht & Partner Patentanwälte mbB
(86) Internationale Anmeldenummer: PCT/DE2013/100364
(87) Internationale Veröffentlichungsnummer: WO 2014/067512

(56) Entgegenhaltungen:
- EP-A1- 0 803 183
- EP-A1- 1 606 992
- EP-A2- 1 120 237
- DE-A1-102004 027 612
- US-A- 4 170 934
- US-A- 4 240 245
- US-A1- 2003 226 336

## Beschreibung

Die Erfindung betrifft ein Verfahren zum Komprimieren von langstängeligem Pflanzengut, bei dem das langstängelige Pflanzengut in eine Kompressionseinheit eingebracht und gepresst wird und bei dem das in der Kompressionseinheit gepresste langstängelige Pflanzengut zu Transporteinheiten abgepackt wird. Ferner betrifft die Erfindung eine Vorrichtung zum Komprimieren von langstängeligem Pflanzengut mit einer einen Kompressionsraum für das langstängelige Pflanzengut umfassenden Kompressionseinheit und mit einer Fördereinheit zum Einbringen des langstängeligen Pflanzenguts in den Kompressionsraum der Kompressionseinheit, wobei der Kompressionsraum eine der Fördereinheit zugeordnete Aufnahmeöffnung aufweist, über die das langstängelige Pflanzengut in den Kompressionsraum der Kompressionseinheit einbringbar ist.

In der landwirtschaftlichen Praxis werden heute zum Formpressen von Heu oder Stroh üblicherweise Ballenpressen verwendet, bei denen die Verdichtung des Pflanzenguts über einen voreingestellten mechanischen Widerstand erfolgt. Beispielsweise wird das Pflanzengut in einem sich verdichtenden Presskanal zu Quaderballen gepresst, wobei die Presskraft über mechanisch wirkende Kolben aufgebracht wird. Das bekannte Verfahren, welches seit vielen Jahren in der Praxis angewendet wird, kommt jedoch an seine Grenzen, wenn sperriges, grobstängeliges Pflanzengut, beispielsweise Miscanthusstiele, komprimiert werden soll. Sofern die langstängeligen Stiele in Pressrichtung in dem Pressenkanal der Formpresse liegen, wirken sie wie ein mechanischer Stempel mit der Folge, dass der Pflanzengutstrom ohne wesentliche Kompression durch den Pressenkanal geschoben wird. Die angestrebte Verdichtung wird dann noch nicht erreicht. Dies hat zur Folge, dass das Pflanzengut letztlich nur unzureichend komprimiert ist und im Weiteren Transportkapazitäten nicht effizient ausgelastet werden können. Insofern verschlechtert sich die Wirtschaftlichkeit der gesamten Verwertungskette bei der Gewinnung des Pflanzenguts als Biomasse und Energieträger.

Aus der US 4,170,934 A ist eine Heu- bzw. Strohballenpresse bekannt, welche kontinuierlich auf dem Boden liegendes, langstieliges Pflanzengut aufnimmt und einer Kompressionskammer zuführt. Das langstielige Pflanzengut wird in der Kompressionskammer mit einem Hub eines Kolbens verdichtet. Weiter wird die Menge des langstieligen Pflanzenguts gewichtsmäßig bestimmt.

Aus der EP 1 120 237 A2 ist eine stationäre Anordnung zum Formen von Quaderballen bekannt. Beschrieben ist die Anwendung mit Kunststofffasern. Dies können kurz geschnittene sogenannte Stapelfasern oder lange Faserstränge, sogenanntes Tow, sein. Alternativ kann es sich um Naturfasern handeln. Das Fasergut wird über eine rohrförmige Zuführung und einen Kondensor zugeführt und wahlweise vor der Eingabe in die Kompressionseinheit oder unmittelbar in der Kompressionseinheit selbst gewogen. Beschrieben ist auch, dass der gepresste Ballen gewogen werden kann.

Aus der US 2003/0226336 A1 ist eine Vorrichtung zur Kompression von Pflanzengut bekannt. Einer Kompressionseinheit wird dabei ein in Quaderform vorverdichteter Ballen zugeführt, dessen Gewicht vor der Eingabe in eine Kompressionseinheit bestimmt wird. In der Kompressionseinheit wird der Ballen weiter verdichtet.

Die EP 1 606 992 A1 beschreibt eine mobile, an ein Zugfahrzeug ankoppelbare Ballenpresse für landwirtschaftliche Zwecke. Dabei wird Pflanzengut kontinuierlich vom Boden aufgenommen und in einen Zufuhrkanal, der einem Kompressionsraum vorgelagert ist, transportiert. Im Zufuhrkanal erfolgt eine Gewichtsbestimmung des Pflanzengutes, das weiter kontinuierlich in den Kompressionsraum gefördert wird. Mittels eines kontinuierlich arbeitenden Kolbens wird das Pflanzengut in dem Kompressionsraum zu Ballen gepresst. Dabei erfolgt das Verpressen gegen ein von einem zuletzt gepressten Ballen gebildetes Widerlager, wodurch der letztgenannte Ballen aus der Kompressionseinheit ausgeworfen wird.

Eine ähnliche Ballenpresse ist in der DE 10 2004 027 612 A1 beschrieben. Bei dieser Ballenpresse wird das Gewicht des Ballens in gepresster Form in der Kompressionseinheit bestimmt.

Weitere Ausführungsformen von Ballenpressen für Pflanzengut sind in der US 4,240,245 und in der EP 0 803 183 A1 beschrieben.

Aufgabe der vorliegenden Erfindung ist es, ein Verfahren und eine Vorrichtung zur Kompression von langstängeligem, insbesondere sperrigem und grobstängeligem Pflanzengut anzugeben, die infolge einer verbesserten Kompression die Wirtschaftlichkeit der Verwertung des Pflanzenguts als Biomasse erhöhen.

Diese Aufgabe wird durch ein erfindungsgemäßes Verfahren mit den Merkmalen von Anspruch 1 gelöst.

Der besondere Vorteil der Erfindung besteht darin, dass statt einer über den mechanischen Widerstand geführten, insbesondere gesteuerten bzw. geregelten Kompression des Pflanzenguts stets eine anhand ihres Gewichts ermittelte Menge des Pflanzenguts komprimiert wird. Es ist somit gewährleistet, dass bei jeder Kompression eine im Wesentlichen gleiche Menge von Pflanzengut komprimiert und abgepackt wird. Die Orientierung des langstängeligen Pflanzenguts in der Kompressionseinheit hat insofern keinen Einfluss auf den Kompressionsgrad. Einer stets veränderlichen und insbesondere unzureichenden Kompression des langstängeligen Pflanzenguts ist somit verlässlich vorgebeugt. Insofern verbessert sich die Wirtschaftlichkeit bei der Verwertung des Pflanzenguts, insbesondere erfolgt eine Optimierung der Transportkosten, da eine gleichbleibend hohe Tonnage erreicht wird.

Kerngedanke der Erfindung ist es insofern, den Kompressionsgrad des Pflanzenguts gleichmäßiger zu gestalten und insbesondere zu erhöhen. In Abkehr von dem heute üblichen, über den Fließwiderstand realisierten mechanischen Kompressionsverfahren wird hierzu eine anhand ihres Gewichts vorbestimmte Menge von Pflanzengut zu einer Transporteinheit verpresst und abgepackt.

Nach der Erfindung wird das Gewicht des langstängeligen Pflanzenguts beim Befüllen des Kompressionsraumes fortlaufend ermittelt. Die Befüllung des Kompressionsraumes wird unterbrochen, sobald ein Zielgewicht an langstängeligem Pflanzengut erreicht ist. Vorteilhaft ermöglicht die fortlaufende Ermittlung des Gewichts eine engmaschige Kontrolle des Befüllungsvorgangs. Im Rahmen der Erfindung kann das Gewicht des Pflanzenguts beispielsweise kontinuierlich bzw. quasi kontinuierlich oder getaktet in regelmäßigen bzw. unregelmäßigen Zeitintervallen ermittelt werden.

Nach der Erfindung wird das Gewicht des in der Kompressionseinheit eingebrachten langstängeligen Pflanzenguts vor der Kompression des langstängeligen Pflanzenguts ermittelt. Dabei kann vorgesehen sein, dass ein Gewicht von wenigstens einem Teil der Kompressionseinheit mit dem darin befindlichen langstängeligen Pflanzengut sensorisch ermittelt wird und dann von dem ermittelten Wert (Gesamtgewicht) das bekannte Gewicht des wenigstens einen Teils der Kompressionseinheit abgezogen wird. Vorteilhaft kann auf diese Weise insbesondere über handelsübliche Sensoren, beispielsweise Gewichtssensoren, das Gewicht des in der Kompressionseinheit befindlichen langstängeligen Pflanzenguts mit einer hohen Genauigkeit ermittelt werden. Die Kompressionseinheit, die vollständig oder wenigstens teilweise mitgewogen wird, weist hierbei ein konstruktionsseitig festgelegtes, bekanntes Eigengewicht (Taragewicht) auf. Dieses der Kompressionseinheit zugeordnete Gewicht kann in einfacher Weise von dem sensorisch ermittelten Gesamtgewicht abgezogen werden zur Bestimmung des (Netto-)Gewichts des in der Kompressionseinheit befindlichen langstängeligen Pflanzenguts.

Quasi prozessimmanent kann insofern mit wenig Aufwand das Zielgewicht des in die Kompressionseinheit einzubringenden langstängeligen Pflanzenguts ermittelt werden.

Das Zielgewicht kann fest vorgegeben werden oder abhängig von der Beschaffenheit des Pflanzenguts, beispielsweise der Art bzw. Sorte der Pflanze, dem Feuchtigkeitsgehalt oder anderen für die Gewichtsbestimmung relevanten Parameter festgelegt werden. Beispielsweise kann das Zielgewicht für die Befüllung der Kompressionseinheit bei Pflanzenstoffen, welche eine höhere Restfeuchte aufweisen, höher gewählt werden als bei Pflanzenstoffen mit einer geringeren Restfeuchte.

Nach der Erfindung wird zur Kompression des langstängeligen Pflanzenguts in der Kompressionseinheit das langstängelige Pflanzengut auf ein geometrisch vorbestimmtes Maß mit vordefiniertem Kompressionsvolumen gepresst. Dabei kann vorgesehen sein, das das langstängelige Pflanzengut auf eine vordefinierte Kompressionslänge gepresst wird. Vorteilhaft wird durch die Kompression auf ein vordefiniertes Volumen bzw. eine vordefinierte Länge bei bekanntem Querschnitt ein immer gleicher Presskörper (Transporteinheit) geformt, der hinsichtlich seiner Geometrie in optimaler Weise auf die Transportbedingungen abgestimmt werden kann. Beispielsweise können Länge, Breite und Höhe eines quaderförmigen Ballenkörpers auf die Geometrie eines landwirtschaftlichen Anhängers, eines Sattelaufliegers oder eines Schiffscontainers angepasst werden. Hierdurch kann es gelingen, den zur Verfügung stehenden Transportraum in optimaler Weise zu nutzen und die Transportkosten signifikant zu senken. Darüber hinaus hat der Ballenkörper bei konstantem Gewicht und immer gleicher Geometrie eine konstante Dichte. Dies ist insbesondere bei der Verwertung des Pflanzenguts etwa als Biomasse von Vorteil.

Die Kompression beim Verpressen des Pflanzenguts erfolgt insofern nicht kraft- bzw. widerstandsgesteuert. Vielmehr wird weg- bzw. volumengeführt gepresst. Die hierbei auftretenden Kräfte variieren abhängig von der Orientierung des Pflanzenguts in der Kompressionseinheit. Hohe Presskräfte treten insbesondere dann auf, wenn ein Pflanzenstiel in seiner Längsrichtung komprimiert werden soll und demzufolge ausknicken muss.

Nach einer Weiterbildung der Erfindung wird das langstängelige Pflanzengut vor dem Einbringen desselben in die Kompressionseinheit vorverdichtet. Vorteilhaft kann durch die Vorverdichtung des langstängeligen Pflanzenguts der Befüllungsvorgang der Kompressionseinheit beschleunigt werden. Zugleich kann das Volumen der Kompressionseinheit reduziert werden, wenn in die Kompressionseinheit bereits vorverdichtetes Pflanzengut eingefüllt wird. Insofern reduziert sich die Baugröße einer für das Kompressionsverfahren benutzten Vorrichtung, beispielsweise einer mobilen landwirtschaftlichen Presse.

Nach einer Weiterbildung der Erfindung wird vor dem Pressen teilweise in der Kompressionseinheit befindliches und teilweise aus der Kompressionseinheit ragendes langstängeliges Pflanzengut derart durchtrennt, dass in der Kompressionseinheit befindliche Teile des langstängeligen Pflanzenguts gepresst werden und aus der Kompressionseinheit herausragende Teile des langstängeligen Pflanzenguts während des Pressens außerhalb der Kompressionseinheit verbleiben und insofern nicht gepresst werden. Vorteilhaft verbessert sich die Beherrschbarkeit des Kompressionsprozesses durch das vorgelagerte Durchtrennen von Pflanzengut, welches nur teilweise in der Kompressionseinheit vorgesehen ist und teilweise aus der Kompressionseinheit herausragt. Es wird eine im Wesentlichen unkontrollierte Bewegung der freien Enden des langstängeligen Pflanzenguts vermieden. Das abgetrennte und nicht gepresste Pflanzengut kann beispielsweise im nachfolgenden Verfahrensschritt erneut in die Kompressionseinheit eingebracht und verdichtet werden.

Nach einer Weiterbildung der Erfindung erfolgt das Verpressen des langstängeligen Pflanzenguts sequentiell. Vorteilhaft können die Prozessparameter und insbesondere der Kompressionsgrad bei dem sequentiellen Verfahrensschritt in besonders einfacher Weise kontrolliert bzw. justiert werden. In der Praxis hat sich gezeigt, dass sich hinsichtlich Größe und Gewicht der Transporteinheiten Abweichungen von weniger als 5% ergeben. Eine Genauigkeit von 1 bis 2% konnte in der Erprobung reproduzierbar erzielt werden.

Die eingangs genannte Aufgabe wird ferner durch eine erfindungsgemäße Vorrichtung mit den Merkmalen des unabhängigen Anspruches 7 gelöst.

Der besondere Vorteil der Erfindung besteht darin, dass infolge des bewegbaren Stempels eine definierte, insbesondere weggesteuerte Kompression des langstängeligen Pflanzenguts bewirkt wird. Auf eine kraftgeführte Pressung des langstängeligen Pflanzenguts in dem Kompressionsraum der Kompressionseinheit kann demzufolge verzichtet werden. Die Orientierung der Pflanzenstiele in der Kompressionseinheit hat insofern keinen oder allenfalls einen untergeordneten Einfluss auf den Kompressionsgrad und das Endvolumen der Transporteinheiten. Die Transporteinheiten haben demzufolge stets eine vorbekannte, konstante Größe und ein vorbekanntes, konstantes Gewicht. Der Transport des Pflanzenguts kann insofern in besonders wirtschaftlicher Weise erfolgen.

Der Stempel kann beispielsweise fluidisch, insbesondere hydraulisch bzw. pneumatisch, betätigt werden. Beispielsweise kann der Stempel mechanisch angetrieben werden, insbesondere kann eine Hubspindel oder ein Kettenantrieb vorgesehen sein.

Nach der Erfindung ist eine Gewichtsbestimmungseinheit vorgesehen, die mit der Kompressionseinheit in Wirkverbindung steht derart, dass über die Gewichtsbestimmungseinheit ein Gewicht von wenigstens einem Teil der Kompressionseinheit und ein Gewicht des in dem Kompressionsraum der Kompressionseinheit eingebrachten langstängeligen Pflanzenguts bestimmbar ist. Vorteilhaft kann über das Gewicht die Menge des in den Kompressionsraum der Kompressionseinheit eingebrachten langstängeligen Pflanzenguts in einfacher Weise und mit guter Genauigkeit bestimmt werden. Bei der Bestimmung des Gewichts kann optional die Feuchte des Pflanzenguts berücksichtigt werden, sodass feuchtigkeitsbereinigt stets eine bestimmte Menge langstängeligen Pflanzenguts gepresst und zu Transporteinheiten abgepackt wird. Insbesondere ist die Bestimmung des Gewichts von wenigstens einem Teil der Kompressionseinheit (oder der gesamten Kompressionseinheit) und des darin befindlichen langstängeligen Pflanzenguts einfacher als die separate messtechnische Erfassung des (Netto-) Gewichts des in der Kompressionseinheit eingebrachten Pflanzenguts allein.

Nach einer Weiterbildung der Erfindung ist der Aufnahmeöffnung des Kompressionsraums eine Trenneinheit zugeordnet mit einem Trennmittel, wobei mittels des Trennmittels durch die Aufnahmeöffnung des Kompressionsraums ragendes langstängeliges Pflanzengut abgetrennt wird. Vorteilhaft kann das Durchtrennen des Pflanzenguts unmittelbar vor dem Verpressen des in dem Kompressionsraum befindlichen langstängeligen Pflanzenguts in besonders einfacher Weise erfolgen, wenn die Trenneinheit mit dem Trennmittel der Aufnahmeöffnung des Kompressionsraums zugeordnet ist. Als Trennmittel kann beispielsweise ein Schneidwerkzeug vorgesehen sein.

Ausführungsbeispiele der Erfindung werden nachfolgend anhand von Zeichnungen näher erläutert. Es zeigen:
- Figur 1: eine Darstellung des Verfahrensablaufs,
- Figur 2: eine Prinzipskizze einer erfindungsgemäßen Vorrichtung beim Einbringen von vorkomprimiertem langstängeligem Pflanzengut in eine Kompressionseinheit mit einem Kompressionsstempel in einer Grundposition und
- Figur 3: die Kompressionseinheit nach Figur 2 beim Pressen des Pflanzenguts mit dem Kompressionsstempel in einer Arbeitsposition.

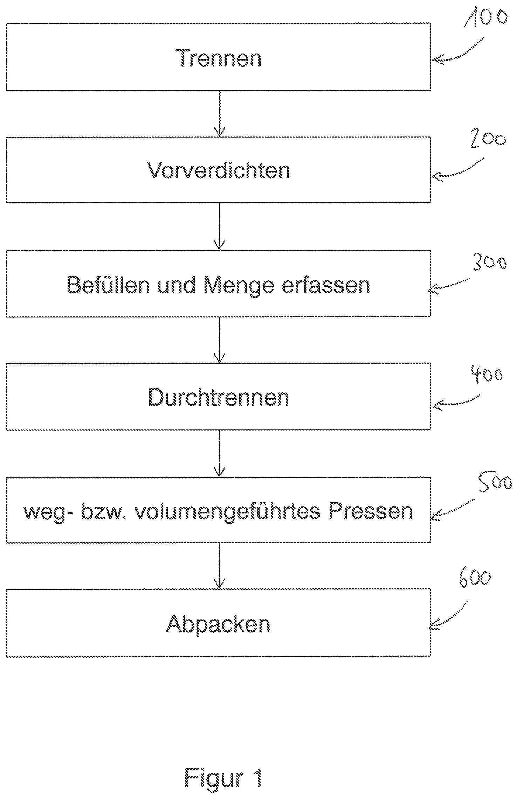

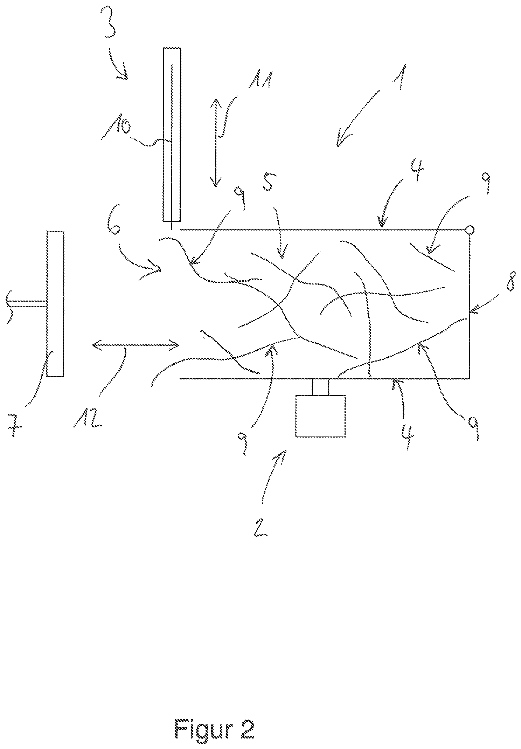

Ein Verfahren zum Komprimieren langstängeligen Pflanzenguts 9 nach Figur 1 sieht zunächst vor, dass die auf dem Acker angebaute Pflanze mittels einer geeigneten Schneidvorrichtung im unteren Bereich des Pflanzenstiels durchtrennt bzw. abgeschnitten wird (Verfahrensschritt 100). Anschließend wird im Rahmen der Weiterverarbeitung und Gewinnung von Biomasse das abgetrennte, langstängelige Pflanzengut 9 gesammelt und vorverdichtet (Verfahrensschritt 200). Das vorverdichtete Pflanzengut wird dann in eine Kompressionseinheit 1 eingebracht (Verfahrensschritt 300). Das Befüllen der Kompressionseinheit 1 erfolgt insbesondere durch eine Aufnahmeöffnung 6. Teil des Befüllungsvorgangs der Kompressionseinheit 1 ist die Ermittlung eines Gewichts des eingebrachten Pflanzenguts 9 (Füllgewicht oder Nettogewicht) über geeignete Sensoren, insbesondere Gewichtssensoren. Sobald eine vorbestimmte Menge langstängeligen Pflanzenguts 9 in die Kompressionseinheit 1 eingebracht ist, wird durch die Aufnahmeöffnung 6 aus der Kompressionseinheit 1 herausragendes Pflanzengut 9 durchtrennt (Verfahrensschritt 400). Nach dem Durchtrennen wird das in der Kompressionseinheit 1 befindliche langstängelige Pflanzengut 9 auf ein vorbestimmtes Volumen bzw. eine vorbestimmte Weglänge gepresst (Verfahrensschritt 500). Nach dem Pressen wird das komprimierte Pflanzengut 9 zu Transporteinheiten abgepackt (Verfahrensschritt 600). Insbesondere das Vorverdichten des Pflanzenguts 9 im Verfahrensschritt 200 erfolgt optional. Auf den Verfahrensschritt 200 kann insofern verzichtet werden. Ebenso optional ist das Durchtrennen von aus der Kompressionseinheit 1 herausragenden Pflanzenguts im Verfahrensschritt 400. Beispielsweise kann auf den Verfahrensschritt 400 vollständig verzichtet werden. Ebenso ist es möglich, den Schneidvorgang (Verfahrensschritt 400) zum integralen Bestandteil des Pressvorgangs (Verfahrensschritt 500) zu machen. In diesem Fall wird mittels des Presswerkzeugs (Stempel 7) in einem einzigen Verfahrensschritt aus der Kompressionseinheit 1 herausragendes Pflanzengut 9 abgeschert und in der Kompressionseinheit 1 befindliches Pflanzengut 9 komprimiert.
Eine erfindungsgemäße Vorrichtung gemäß Figur 2 besteht im Wesentlichen aus einer Kompressionseinheit 1, einer Gewichtsbestimmungseinheit 2 und einer Trenneinheit 3. Die Kompressionseinheit 1 weist einen von Gehäusewandungen 4 umschlossenen Kompressionsraum 5, eine dem Kompressionsraum 5 zugeordnete Aufnahmeöffnung 6, eine Kompressionsstempel 7 sowie ein Widerlager 8 auf. Die Gehäusewandungen 4 begrenzen den im Querschnitt im Wesentlichen rechteckigen Kompressionsraum 5 mantelseitig. Stirnseitig sind zum einen die Aufnahmeöffnung 6 und gegenüberliegend das Widerlager 8 ausgebildet. Der Aufnahmeöffnung 6 ist zudem der in einer Grundposition dargestellte Stempel 7 zugeordnet.

Die Gewichtsbestimmungseinheit 2 ist in Wirkverbindung mit der Gehäusewandung 4 der Kompressionseinheit 1 vorgesehen. Die Gewichtsbestimmungseinheit 2 ist so ausgebildet, dass mit der Gewichtsbestimmungseinheit 2 das Gewicht der Gehäusewandung 4, des Widerlagers 8 und des in dem Kompressionsraum 5 vorgesehenen langstängeligen Pflanzenguts 9 bestimmt wird. Demzufolge kann mittels der Gewichtsbestimmungseinheit 2 das Gewicht des in den Kompressionsraum 5 eingebrachten langstängeligen Pflanzenguts 9 vollständig und das Gewicht der Kompressionseinheit 1 teilweise bestimmt werden. Nicht mitbestimmt wird etwa das Gewicht des Stempels 7 in seiner Grundposition.

Der Aufnahmeöffnung 6 ist ferner die Trenneinheit 3 mit einem schneidenförmigen Trennmittel 10 zugeordnet. Die Schneide 10 kann zum Durchtrennen von aus dem Kompressionsraum 5 herausragenden langstängeligen Pflanzenguts 9 in eine Schneidrichtung 11 verfahren werden.

Nach dem Durchtrennen der Pflanzenstiele wird das Pflanzengut 9 zunächst mittels einer nicht dargestellten Fördereinheit in Richtung des Kompressionsraums 5 der Kompressionseinheit 1 gefördert. Beispielsweise kann zu diesem Zweck eine Förderwalze oder ein Ketten- bzw. Siebförderer vorgesehen sein. Das Pflanzengut 9 wird dann über die Aufnahmeöffnung 6 in den Kompressionsraum 5 eingebracht. Die Grundposition des Stempels 7 ist so gewählt, dass eine Befüllung des Kompressionsraums 5 in einfacher Weise erfolgen kann. Fortlaufend wird beim Befüllen über die Gewichtsbestimmungseinheit 2 das Gewicht des bereits in den Kompressionsraum 5 eingebrachten Pflanzenguts 9 ermittelt. Sobald ein Zielgewicht erreicht ist, wird die Befüllung des Kompressionsraums 5 unterbrochen. Zu diesem Zweck wird beispielsweise die Fördereinheit stillgesetzt bzw. außer Eingriff verbracht. Es wird dann mittels der Trenneinheit 3 Pflanzengut 9, welches sich im Bereich der Aufnahmeöffnung 6 befindet, durchtrennt. Nachdem herausragendes langstängeliges Pflanzengut 9 mittels der Schneide 10 abgetrennt und die Schneide 10 anschließend wieder außer Eingriff gebracht ist, kann der Stempel 7 in die Kompressionsrichtung 12 zugestellt werden. Der Stempel 7 dringt dann in den Kompressionsraum 5 ein und presst das darin befindliche langstängelige Pflanzengut 9 mehr und mehr zusammen. Hierbei steigt der Druck auf die Gehäusewandungen 4 und insbesondere auf das Widerlager 8, welches den Kompressionsraum 5 auf der dem Stempel 7 gegenüberliegenden Stirnseite begrenzt.

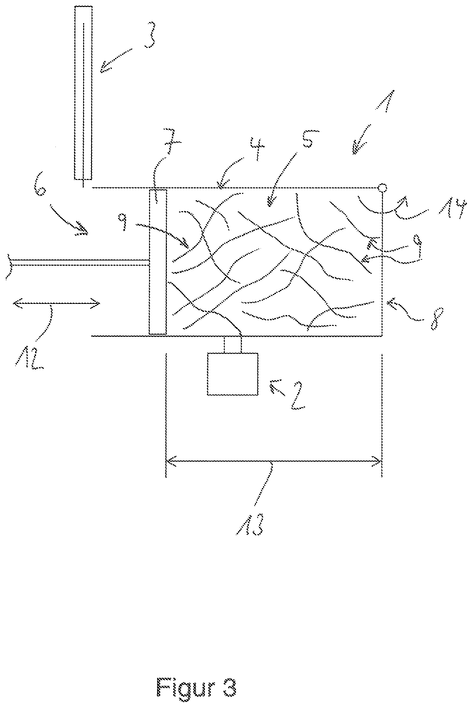

Figur 3 zeigt den Stempel 7 in der Kompressionsposition, in der das langstängelige Pflanzengut 9 auf eine minimale Länge 13 komprimiert ist. Die Kompression des langstängeligen Pflanzenguts 9 erfolgt insofern weggesteuert und nicht - wie heute allgemein üblich - kraft- bzw. druckgeführt. Nachdem das langstängelige Pflanzengut 9 auf seine minimale Länge 13 komprimiert ist, kann der so geformte Quaderballen zu einer Transporteinheit verpackt und aus dem Kompressionsraum 5 entnommen werden. Dies erfolgt beispielsweise, indem das Widerlager 8 in Schwenkrichtung 14 aufgeschwenkt und der Ballen durch eine weitere Vorwärtsbewegung des Stempels 7 aus dem Kompressionsraum 5 herausgefahren wird.

Während der Stempel 7 aus der Grundposition in die Kompressionsposition verfahren wird, kann auf die Gewichtsbestimmung mittels der Gewichtsbestimmungseinheit 2 verzichtet werden.

Die Gewichtsbestimmung kann über handelsübliche geeignete Gewichtssensoren erfolgen. Die Fördereinheit, die Gewichtsbestimmungseinheit 2, eine dem Stempel 7 zugeordnete, nicht dargestellte Aktoreinheit sowie die Trenneinheit 3 können über eine gemeinsame, nicht dargestellte Steuereinheit zusammenwirken. Die Steuereinheit kann zudem eine optional vorgesehene Vorverdichtungseinheit betätigen, die dazu dient, das in den Kompressionsraum 5 der Kompressionseinheit 1 einzubringende langstängelige Pflanzengut 9 beim Transport in den Kompressionsraum 5 vorzuverdichten.

Nach einer alternativen Ausführungsform der Erfindung kann das Widerlager 8 als festes Widerlager ausgebildet sein. Die Entnahme des gepressten langstängeligen Pflanzenguts 9 erfolgt dann beispielsweise über eine separat vorgesehene Entnahmeöffnung oder über die Aufnahmeöffnung 6.

## Patentansprüche

1. Verfahren zum Komprimieren von langstängeligem Pflanzengut, bei dem das langstängelige Pflanzengut (9) in einen Kompressionsraum (5) einer Kompressionseinheit (1) eingebracht und gepresst wird und bei dem das mittels der Kompressionseinheit (1) gepresste langstängelige Pflanzengut (9) zu Transporteinheiten abgepackt wird, wobei in den Kompressionsraum (5) eine anhand ihres Gewichts vorbestimmte Menge des langstängeligen Pflanzenguts (9) eingebracht wird, wobei eine mit der Kompressionseinheit (1) in Wirkverbindung stehende Gewichtsbestimmungseinheit (2) vorgesehen wird, wobei die Gewichtsbestimmungseinheit (2) ein Gewicht von wenigstens einem Teil der Kompressionseinheit und das Gewicht des in den Kompressionsraum (5) eingebrachten langstängeligen Pflanzenguts (9) vor der Kompression des langstängeligen Pflanzenguts (9) bestimmt, wobei das Gewicht des langstängeligen Pflanzenguts (9) beim Befüllen des Kompressionsraums (5) fortlaufend ermittelt und das Befüllen des Kompressionsraums (5) unterbrochen wird, sobald die anhand eines Zielgewichts vorbestimmte Menge an langstängeligem Pflanzengut (9) erreicht ist, und wobei das langstängelige Pflanzengut (9) in dem Kompressionsraum (5) auf ein geometrisch vorbestimmtes Maß mit vordefiniertem Kompressionsvolumen gepresst wird.

2. Verfahren nach Anspruch 1, **dadurch gekennzeichnet, dass** zur Bestimmung des Gewichts des in die Kompressionseinheit (1) eingebrachten langstängeligen Pflanzenguts (9) ein Gewicht von wenigstens einem Teil der Kompressionseinheit (1) und das Gewicht des darin befindlichen langstängeligen Pflanzenguts (9) gemeinsam sensorisch erfasst werden und das von dem so erfassten Gesamtgewicht das Gewicht des wenigstens einen Teil der Kompressionseinheit (1) abgezogen wird.

3. Verfahren nach Anspruch 1 oder 2, **dadurch gekennzeichnet, dass** das langstängelige Pflanzengut (9) in dem Kompressionsraum (5) auf eine vordefinierte Kompressionslänge gepresst wird.

4. Verfahren nach einem der Ansprüche 1 bis 3, **dadurch gekennzeichnet, dass** das langstängelige Pflanzengut (9) vor dem Einbringen desselben in die Kompressionseinheit (1) vorverdichtet wird.

5. Verfahren nach einem der Ansprüche 1 bis 4, **dadurch gekennzeichnet, dass** nach dem Befüllen der Kompressionseinheit (1) und vor dem Pressen lediglich teilweise in der Kompressionseinheit (1) befindliches langstängeliges Pflanzengut (9) durchtrennt wird derart, dass ein in der Kompressionseinheit (1) befindlicher Teil des langstängeligen Pflanzenguts (9) nach dem Durchtrennen gepresst wird und dass ein außerhalb der Kompressionseinheit (1) befindlicher Teil des langstängeligen Pflanzenguts (9) während des Pressens außerhalb der Kompressionseinheit (1) verbleibt.

6. Verfahren nach einem der Ansprüche 1 bis 5, **dadurch gekennzeichnet, dass** das Einbringen des langstängeligen Pflanzenguts (9) in die Kompressionseinheit (1) und das Verpressen des langstängeligen Pflanzenguts (9) sequentiell erfolgt, wobei während des Pressens des in der Kompressionseinheit (1) befindlichen langstängeligen Pflanzenguts (9) der Befüllungsvorgang der Kompressionseinheit (1) unterbrochen wird.

7. Vorrichtung zum Komprimieren von langstängeligem Pflanzengut (9) zu Presskörpern mit einer einen Kompressionsraum (5) für das langstängelige Pflanzengut (9) umfassenden Kompressionseinheit (1) und mit einer Fördereinheit zum Einbringen des langstängeligen Pflanzenguts (9) in den Kompressionsraum (5) der Kompressionseinheit (1), wobei der Kompressionsraum (5) eine der Fördereinheit zugeordnete Aufnahmeöffnung (6) aufweist, über die das langstängelige Pflanzengut (9) in den Kompressionsraum (5) der Kompressionseinheit (1) einbringbar ist, wobei die Kompressionseinheit (1) einen zwischen einer Grundposition und einer Verdichtungsposition bewegbaren Stempel (7) aufweist, der in der Grundposition derart außer Eingriff angeordnet ist, dass das langstängelige Pflanzengut (9) in den Kompressionsraum (5) einbringbar ist, und der in der Kompressionsposition derart in den Kompressionsraum (5) eingetaucht angeordnet ist, dass das langstängelige Pflanzengut (9) in dem Kompressionsraum (5) zusammengepresst vorgesehen ist, wobei eine Gewichtsbestimmungseinheit (2) derart mit der Kompressionseinheit (1) in Wirkverbindung steht, dass über die Gewichtsbestimmungseinheit (2) ein Gewicht von wenigstens einem Teil der Kompressionseinheit (1) und ein Gewicht des in den Kompressionsraum (5) der Kompressionseinheit (1) eingebrachten langstängeligen Pflanzenguts (9) vor der Kompression des langstängeligen Pflanzenguts (9) bestimmbar ist, zum fortlaufenden Ermitteln des Gewichts des langstängeligen Pflanzenguts (9) beim Befüllen des Kompressionsraums (5), wobei das Befüllen des Kompressionsraums (5) unterbrochen wird, sobald ein Zielgewicht des langstängeligen Pflanzenguts (9) erreicht ist, und wobei das langstängelige Pflanzengut (9) in der Kompressionsposition des Stempels (7) auf ein geometrisch vorbestimmtes Maß mit vordefiniertem Kompressionsvolumen zusammengepresst vorgesehen ist.

8. Vorrichtung nach Anspruch 7, **dadurch gekennzeichnet, dass** der Aufnahmeöffnung (6) des Kompressionsraums (5) eine Trenneinheit (3) zugeordnet ist, wobei mittels eines Trennmittels (10) der Trenneinheit (3) durch die Aufnahmeöffnung (6) aus dem Kompressionsraum (5) ragende Teile des langstängeligen Pflanzenguts (9) abtrennbar sind.

## Claims

1. A method for compressing long-stem plant material, in which the long-stem plant material (9) is introduced into a compression chamber (5) of a compression unit (1) and pressed and in which the long-stem plant material (9) pressed by means of the compression unit (1) is packaged to form transportable units, wherein an amount of the long-stem plant material (9), predefined based on its weight, is introduced into the compression chamber (5), wherein a weight determining unit (2) that is operatively connected to the compression unit (1) is provided, wherein the weight determining unit (2) determines a weight of at least one part of the compression unit and the weight of the long-stem plant material (9) introduced into the compression chamber (5) before the compression of the long-stem plant material (9), wherein the weight of the long-stem plant material (9) is determined continuously during the filling of the compression chamber (5) and the filling of the compression chamber (5) is stopped as soon as the amount of long-stem plant material (9), predefined by means of a target weight, is reached, and wherein the long-stem plant material (9) is pressed to a geometrically predefined extent with a predefined compression volume in the compression chamber (5).

2. The method in accordance with claim 1, **characterized in that** for determining the weight of the long-stem plant material (9) introduced into the compression unit (1), a weight of at least one part of the compression unit (1) and the weight of the long-stem plant material (9) located therein are determined together by sensors and the weight of the at least one part of the compression unit (1) is subtracted from the thus determined total weight.

3. The method in accordance with claim 1 or 2, **characterized in that** the long-stem plant material (9) is pressed to a predefined compression length in the compression chamber (5).

4. The method in accordance with any one claims 1 to 3, **characterized in that** the long-stem plant material (9) is pre-compacted before being introduced into the compression unit (1).

5. The method in accordance with any one of claims 1 to 4, **characterized in that** after the filling of the compression unit (1) and before the pressing, long-stem plant material (9) located only partially in the compression unit (1) is severed such that a part of the long-stem plant material (9) located in the compression unit (1) is pressed after the severing and that a part of the long-stem plant material (9) located outside the compression unit (1) remains outside the compression unit (1) during the pressing.

6. The method in accordance with any one of claims 1 to 5, **characterized in that** the introduction of the long-stem plant material (9) into the compression unit (1) and the pressing together of the long-stem plant material (9) occurs sequentially, whereby the filling process of the compression unit (1) is stopped during the pressing of the long-stem plant material (9) located in the compression unit (1).

7. A device for compressing long-stem plant material (9) into pressed bodies with a compression unit (1) comprising a compression chamber (5) for the long-stem plant material (9) and with a feeder unit for introducing the long-stem plant material (9) into the compression chamber (5) of the compression unit (1), whereby the compression chamber (5) has an inlet opening (6) associated with the feeder unit, via which the long-stem plant material (9) can be introduced into the compression chamber (5) of the compression unit (1), the compression unit (1) comprising a plunger (7) movable between a home position and a compacting position, which in the home position is arranged disengaged such that the long-stem plant material (9) can be introduced into the compression chamber (5) and which in the compression position is arranged plunged into the compression chamber (5) such that the long-stem plant material (9) is provided in the compression chamber (5) pressed together, wherein a weight determining unit (2) is operatively connected to the compression unit (1) such that by means of the weight determining unit (2) a weight of at least one part of the compression unit (1) and a weight of the long-stem plant material (9) introduced into the compression chamber (5) of the compression unit (1) is determinable before the compression of the long-stem plant material (9), for continuously determining the weight of the long-stem plant material (9) during the filling of the compression chamber (5), wherein the filling of the compression chamber (5) is stopped as soon as a target weight of long-stem plant material (9) is reached, and wherein the long-stem plant material (9) is provided pressed to a geometrically predefined extent with a predefined compression volume in the compression chamber (5) in the compression position of the plunger (7).

8. The device according to claim 7, **characterized in that** a cutting unit (3) is associated with the inlet opening (6) of the compression chamber (5), whereby parts of the long-stem plant material (9) protruding out of the compression chamber (5) through the inlet opening (6) can be cut by means of a cutting means (10) of the cutting unit (3).

## Revendications

1. Procédé pour comprimer des produits végétaux à longue tige, selon lequel les produits végétaux à longue tige (9) sont introduits et pressés dans une chambre de compression (5) d'une unité de compression (1) et selon lequel les produits végétaux à longue tige (9) pressés au moyen de l'unité de compression (1) sont conditionnés en unités de transport, dans lequel une quantité de produit végétaux à longue tige (9), prédéfinie sur la base de son poids, est introduite dans la chambre de compression (5), dans lequel une unité de définition de poids (2) en liaison fonctionnelle avec l'unité de compression (1) est prévue, dans lequel l'unité de définition de poids (2) définit un poids d'au moins une partie de l'unité de compression et le poids des produits végétaux à longue tige (9) introduits dans la chambre de compression (5) avant la compression des produits végétaux à longue tige (9), dans lequel le poids des produits végétaux à longue tige (9) est déterminé en continu lors du remplissage de la chambre de compression (5) et le remplissage de la chambre de compression (5) est interrompu dès que la quantité des produits végétaux à longue tige (9), prédéfinie sur la base d'un poids cible, est atteinte, et dans lequel les produits végétaux à longue tige (9) sont pressés dans la chambre de compression (5) à un niveau prédéfini de manière géométrique avec un volume de compression prédéfini.

2. Procédé selon la revendication 1, **caractérisé en ce que**, pour définir le poids des produits végétaux à longue tige (9) introduits dans l'unité de compression (1), un poids d'au moins une partie de l'unité de compression (1) et le poids des produits végétaux à longue tige (9) se trouvant dedans sont détectés conjointement par un capteur et le poids de la au moins une partie de l'unité de compression (1) est déduit du poids total ainsi détecté.

3. Procédé selon la revendication 1 ou 2, **caractérisé en ce que** les produits végétaux à longue tige (9) sont pressés dans la chambre de compression (5) à une longueur de compression prédéfinie.

4. Procédé selon l'une quelconque des revendications 1 à 3, **caractérisé en ce que** les produits végétaux à longue tige (9) sont pré-compactés avant l'introduction de ceux-ci dans l'unité de compression (1).

5. Procédé selon l'une quelconque des revendications 1 à 4, **caractérisé en ce que**, après le remplissage de l'unité de compression (1) et avant le pressage, les produits végétaux à longue tige (9) se trouvant dans l'unité de compression (1) seulement en partie sont séparés, de telle sorte qu'une partie des produits végétaux à longue tige (9) se trouvant dans l'unité de compression (1) est pressée après la séparation et qu'une partie des produits végétaux à longue tige (9) se trouvant à l'extérieur de l'unité de compression (1) reste à l'extérieur de l'unité de compression (1) pendant le pressage.

6. Procédé selon l'une quelconque des revendications 1 à 5, **caractérisé en ce que** l'introduction des produits végétaux à longue tige (9) dans l'unité de compression (1) et le pressage des produits végétaux à longue tige (9) s'effectuent de manière séquentielle, dans lequel pendant le pressage des produits végétaux à longue tige (9) se trouvant dans l'unité de compression (1), le processus de remplissage de l'unité de compression (1) est interrompu.

7. Dispositif pour comprimer des produits végétaux à longue tige (9) en corps pressés avec une unité de compression (1) comprenant une chambre de compression (5) pour les produits végétaux à longue tige (9) et avec une unité de transport pour introduire les produits végétaux à longue tige (9) dans la chambre de compression (5) de l'unité de compression (1), dans lequel la chambre de compression (5) présente une ouverture de réception (6) associée à l'unité de transport, par l'intermédiaire de laquelle les produits végétaux à longue tige (9) peuvent être introduits dans la chambre de compression (5) de l'unité de compression (1), dans lequel l'unité de compression (1) présente un poinçon (7), mobile entre une position de base et une position de compactage, qui, dans la position de base, est disposé de manière hors de contact, de telle sorte que les produits végétaux à longue tige (9) peuvent être introduits dans la chambre de compression (5), et qui, dans la position de compression, est disposé de manière enfoncée dans la chambre de compression (5) de telle sorte que les produits végétaux à longue tige (9) sont prévus pressés dans la chambre de compression (5), dans lequel une unité de définition de poids (2) est en liaison fonctionnelle avec l'unité de compression (1) de telle sorte qu'un poids d'au moins une partie de l'unité de compression (1) et un poids des produits végétaux à longue tige (9) introduits dans la chambre de compression (5) de l'unité de compression (1) peut être défini par l'intermédiaire de l'unité de définition de poids (2) avant la compression des produits végétaux à longue tige (9), pour déterminer en continu le poids des produits végétaux à longue tige (9) lors du remplissage de la chambre de compression (5), dans lequel le remplissage de la chambre de compression (5) est interrompu dès qu'un poids cible des produits végétaux à longue tige (9) est atteint, et dans lequel les produits végétaux à longue tige (9), dans la position de compression du poinçon (7), sont prévus pressés les uns contre les autres à un niveau prédéfini de manière géométrique avec un volume de compression prédéfini.

8. Dispositif selon la revendication 7, **caractérisé en ce qu'**une unité de séparation (3) est associée à l'ouverture de réception (6) de la chambre de compression (5), dans lequel des parties des produits végétaux à longue tige (9) faisant saillie de la chambre de compression (5) à travers l'ouverture de réception (6) peuvent être séparées au moyen d'un moyen de séparation (10) de l'unité de séparation (3).
